# EUROPÄISCHE PATENTSCHRIFT

(11) **EP 2 377 702 B1**
(45) Veröffentlichungstag und Bekanntmachung des Hinweises auf die Patenterteilung: **22.10.2014**
(21) Anmeldenummer: 11162498.7
(22) Anmeldetag: 14.04.2011
(51) Int. Cl.: B60H 1/00, B60H 1/34

(54) **Scheibenklappe**
Pane flap
Clapet à disques

(30) Priorität: 14.04.2010 DE 102010027735
(43) Veröffentlichungstag der Anmeldung: 19.10.2011
(73) Patentinhaber: Behr GmbH & Co. KG, 70469 Stuttgart (DE)
(72) Erfinder: Benamira, Salah, 70499 Stuttgart (DE); D'Angelo, Marco, 70469 Stuttgart (DE); Fritsche, Uwe, 71686 Remseck am Neckar (DE); Tidelski, Axel, 70711 Leinfelden-Echterdingen (DE); Wanke, Holger, 74385 Pleidelsheim (DE); Wolf, Walter, 71570 Oppenweiler-Zell (DE); Zeller, Kuno, 70469 Stuttgart (DE)
(74) Vertreter: Grauel, Andreas

(56) Entgegenhaltungen:
- EP-A2- 2 272 698
- WO-A1-2010/006760
- GB-A- 1 436 838
- US-A- 4 188 862
- US-B1- 6 971 631

## Beschreibung

Die vorliegende Erfindung betrifft eine Vorrichtung zum Öffnen oder Sperren eines Kanals für eine Luftströmung und/oder zum Erzeugen eines Dralls einer Luftströmung in einem Kanal insbesondere in einer Klimaanlage zum Einbau in ein Fahrzeug und ein Fahrzeug, insbesondere ein Auto, wie z.B. offenbart in WO 2010/006760 A1.

Im Stand der Technik sind Klimaanlagen für Fahrzeuge, z.B. Autos, bekannt, die eine Einstellung der Temperatur innerhalb eines Fahrgastraumes dadurch ermöglichen, dass kalte und warme Luftströmungen gemischt werden können. Die Klimaanlagen sollen dabei eine möglichst kleine Baugröße aufweisen, um geräumige Fahrgasträume erhalten zu können.

Es ist daher eine Aufgabe der vorliegenden Erfindung eine Vorrichtung einer Klimaanlage zur Verfügung zu stellen, die eine Reduzierung der notwendigen Baugröße einer Klimaanlage ermöglichen kann.

A/s erste Ausführungsform der Erfindung wird eine Vorrichtung zum Öffnen oder Sperren eines Kanals für eine Luftströmung und/oder zum Erzeugen eines Dralls einer Luftströmung in einem Kanal zur Verfügung gestellt, wobei der Kanal eine Längsachse aufweist, wobei die Vorrichtung umfasst: eine Reihe erster Elemente, wobei die ersten Elemente in einer ersten Anordnung in Richtung der Längsachse im wesentlichen hintereinander anordenbar sind und wobei die ersten Elemente in einer zweiten Anordnung in Richtung der Längsachse zumindest teilweise hintereinander und jeweils um einen vorgebbaren Winkel verdreht zueinander anordenbar sind. Die erfindungsgemäße Vorrichtung kann als Scheibenklappe bezeichnet werden.

Erfindungsgemäß wird eine Vorrichtung zur Verfügung gestellt, die aus mehreren Elementen besteht. Hierbei können die Elemente ähnlich einem Fächer zusammengeklappt werden und dadurch hintereinander angeordnet werden oder auseinandergeklappt werden, wodurch die Elemente zwar noch hintereinander, aber seitlich versetzt zueinander bzw. um einen vorgebbaren Winkel geneigt zueinander, angeordnet sind. Im zweiten Fall sind die Elemente in einer "aufgefächerten" Art angeordnet und stellen dabei in einem Kanal für eine Luftströmung ein Hindernis dar. Dieses Hindernis kann dazu genutzt werden, um für eine bessere Durchmischung kalter und warmer Luftströmung zu einer homogenen Luftströmung genutzt zu werden. Im "aufgefächerten" Zustand kann außerdem, eventuell zusammen mit weiteren erfindungsgemäßen Vorrichtungen, der Kanal für die Luftströmung insgesamt gesperrt werden. Erfindungsgemäß ist es auch möglich einige erste Elemente "aufzufächern" und weitere erste Elemente zusammengeklappt zu lassen, bzw. nur teilweise "aufzufächern". Dadurch kann es vorteilhaft sein, wenn die Luft durch die Vorrichtung in eine etwa spiralförmige Bahn geleitet wird und ein Drall der Luftströmung aufgeprägt wird.

Als zweite Ausführungsform der Erfindung wird eine Klimaanlage zum Einbau in ein Fahrzeug zur Verfügung gestellt, wobei die Klimaanlage eine Vorrichtung nach einem der Ansprüche 1 bis 6 umfasst.

Als dritte Ausführungsform der Erfindung wird ein Fahrzeug, insbesondere ein Auto, zur Verfügung gestellt, wobei das Fahrzeug eine Klimaanlage nach Anspruch 7 umfasst.

Beispielhafte Ausführungsformen werden in den abhängigen Ansprüchen beschrieben.

Gemäß einer beispielhaften Ausführungsform der Erfindung wird eine Vorrichtung zur Verfügung gestellt, wobei die Vorrichtung umfasst: eine Reihe zweiter Elemente, wobei die zweiten Elemente in der ersten Anordnung in Richtung der Längsachse im wesentlichen hintereinander anordenbar sind und wobei die zweiten Elemente in der zweiten Anordnung in Richtung der Längsachse wahlweise im wesentlichen hintereinander oder zumindest teilweise hintereinander und jeweils um einen vorgebbaren Winkel verdreht zueinander.

Erfindungsgemäß können zwei unabhängige Reihen von ersten und zweiten Elementen innerhalb eines Kanals angeordnet werden, wodurch insbesondere drei Betriebszustände ermöglicht werden können. In einem ersten Betriebszustand können die Reihen von Elementen hintereinander angeordnet werden und hierbei der Luftströmung nur einen geringen Widerstand entgegensetzen. In einem zweiten Zustand können beide Reihen von Elementen teilweise um einen Winkel verdreht zueinander angeordnet sein und hierdurch gleichzeitig aufgefächert sein, wodurch sich ein Hindernis für die Luftströmung ergibt, die dadurch besser durchmischt werden kann. In einem dritten Zustand kann die erste Reihe von Elementen aufgefächert sein und die zweite Reihe von Elementen kann hintereinander angeordnet sein, wodurch, eventuell im Zusammenspiel mit weiteren erfindungsgemäßen Vorrichtungen, sich eine Verriegelung des Kanals ergeben kann.

In einer weiteren erfindungsgemäßen Ausführungsform wird eine Vorrichtung zur Verfügung gestellt, wobei die ersten und/oder zweiten Elemente zumindest teilweise Nasen aufweisen, wobei die Nasen der ersten Elemente in Ausbuchtungen benachbarter erster Elemente und/oder wobei die Nasen der zweiten Elemente in Ausbuchtungen benachbarter zweiter Elemente geführt werden können.

Die einzelnen Elemente einer Reihe können z.B. mittels Nasen und Einbuchtungen miteinander verbunden werden, wodurch vorteilhafterweise nur ein Element (z.B. ein äußeres Element) bewegt werden muss, damit sämtliche Elemente dieser Reihe bewegt werden können. Die ersten und/oder zweiten Elemente können z.B. als Stege ausgebildet sein.

Gemäß einem weiteren Ausführungsbeispiel der vorliegenden Erfindung wird eine Vorrichtung zur Verfügung gestellt, wobei die Nasen in den Einbuchtungen einen Schlupf aufweisen.

Erfindungsgemäß kann ein Schlupf zwischen zwei Stegen angeordnet werden. Hierdurch eröffnet sich die Möglichkeit, dass eine Reihe von Stegen in einem ersten Betriebszustand hintereinander angeordnet werden können und in einem zweiten Betriebszustand diagonal versetzt angeordnet werden können, wobei im zweiten Betriebszustand die Stege zumindest teilweise um einen Winkel verdreht zueinander angeordnet sein können. Aufgrund eines Schlupfes können daher die Stege in einem "aufgefächerten" Zustand oder in einem Zustand angeordnet werden, in dem die Stege hintereinander angeordnet sind. Erfindungsgemäß können auch sämtliche Zustände zwischen diesen beiden Extremsituationen eingenommen werden.

Gemäß einer beispielhaften Ausführungsform der Erfindung wird eine Vorrichtung zur Verfügung gestellt, wobei die Elemente als Stege ausgebildet sind und jeweils an einem Ring angeordnet sind, wobei die Stege radial nach innen verlaufend ausgebildet sind,

In einer weiteren erfindungsgemäßen Ausführungsform wird eine Vorrichtung zur Verfügung gestellt, wobei die Ringe drehbar um eine gemeinsame Achse angeordnet sind,

Gemäß einem weiteren Ausführungsbeispiel der vorliegenden Erfindung wird eine Vorrichtung zur Verfügung gestellt, wobei der Kanal eine kreiszylindrische Form aufweist

Als eine Idee der Erfindung kann angesehen werden, eine Vorrichtung für einen Kanal für eine Luftströmung zur Verfügung zu stellen, die zwei Funktionen ausüben kann, nämlich als Hindernis für die Luftströmung zu dienen, wodurch eine bessere Durchmischung erzielt werden kann. Eine zweite Funktion der Vorrichtung kann darin gesehen werden, den Kanal für die Luftströmung zu versperren. Durch die Vereinigung dieser beiden Funktionen (Durchmischung und Öffnung bzw. Verriegelung) in einer einzigen Vorrichtung kann eine sehr kompakte Baugröße erzielt werden, was Klimaanlagen mit geringem Raumbedarf ermöglichen kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Weitere Einzelheiten und Vorteile der Erfindung werden anhand der in den Zeichnungen dargestellten Ausführungsbeispiele deutlich. Es zeigen
Fig. 1 einen Ring mit einem Steg in einer perspektivischen Ansicht,
Fig. 2 zwei Ringe mit Stege in einer perspektivischen Ansicht,
Fig. 3 mehrere Ringe in einer perspektivischen Ansicht,
Fig. 4 mehrere Ringe in einer perspektivischen Ansicht,
Fig. 5 mehrere Ringe in einer perspektivischen Ansicht.
Fig. 6 mehrere Stege in einer perspektivischen Ansicht,
Fig. 7 mehrere Stege in einer perspektivischen Ansicht,
Fig. 8 mehrere Stege in einer perspektivischen Ansicht,
Fig. 9 mehrere Stege in einer perspektivischen Ansicht,
Fig. 10 zwei Reihen von Stegen in einer perspektivischen Ansicht,
Fig. 11 zwei Reihen von Stegen in einer perspektivischen Ansicht,
Fig. 12 zwei Reihen von Stegen in einer perspektivischen Ansicht,
Fig. 13 zwei Reihen von Stegen in einer perspektivischen Ansicht.
Fig. 14 zwei Reihen von Stegen in einer perspektivischen Ansicht,
Fig. 15 vier Reihen von Stegen innerhalb eines Kanals in einer Draufsicht.
Fig. 16 vier Reihen von Stegen innerhalb eines Kanals in einer Draufsicht,
Fig. 17 vier Reihen von Stegen innerhalb eines Kanals in einer Draufsicht,
Fig.18 drei Formen zur Anordnung innerhalb eines Kanals,
Fig. 19 einen Kanal für eine Luftströmung,
Fig. 20 einen Kanal für eine Luftströmung,

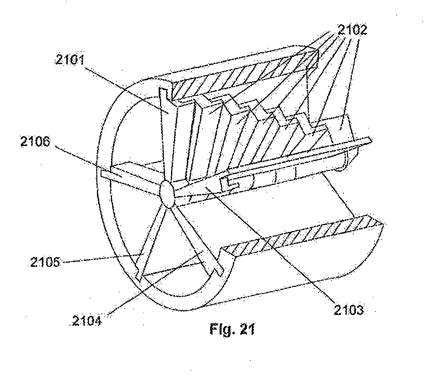

Fig. 21 einen Kanal für eine Luftströmung.

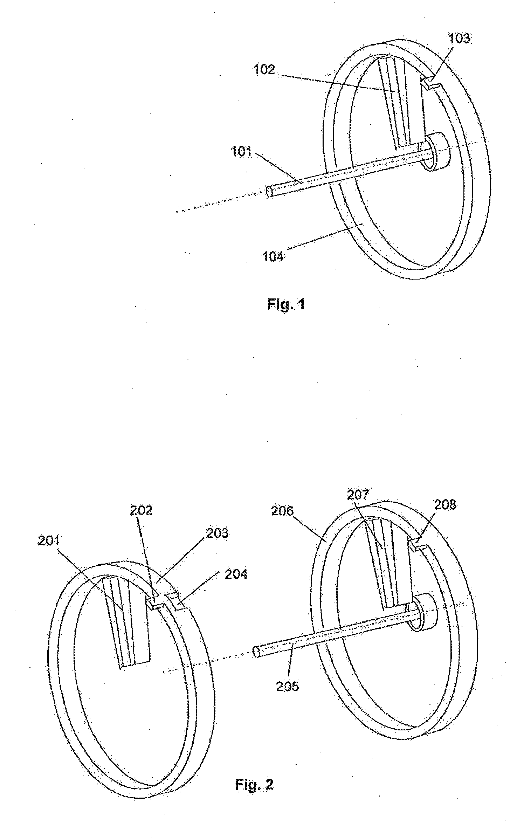

Fig. 1 zeigt einen Ring mit einem radial verlaufenden Steg 102 und einer Nase 103, wobei der Ring um eine Achse 101 rotierbar angeordnet ist. Der Ring stellt einen Teil einer Scheibenklappe dar

Fig. 2 zeigt zwei Ringe 203, 206, die beide auf einer Achse 205 rotierbar angeordnet sind, wobei die beiden Ringe 203, 206 parallel zueinander angeordnet werden können, wobei die Nase 208 des einen Rings 206 in die Einbuchtung 204 des anderen Rings 203 eingreifen kann. Die Einbuchtung 204 ist hierbei größer ausgebildet als die Nase 208, weswegen sich bei einer Rotation des Rings 206 um die Achse 205 ein Schlupf beim Mitführen des Rings 203 ergeben kann.

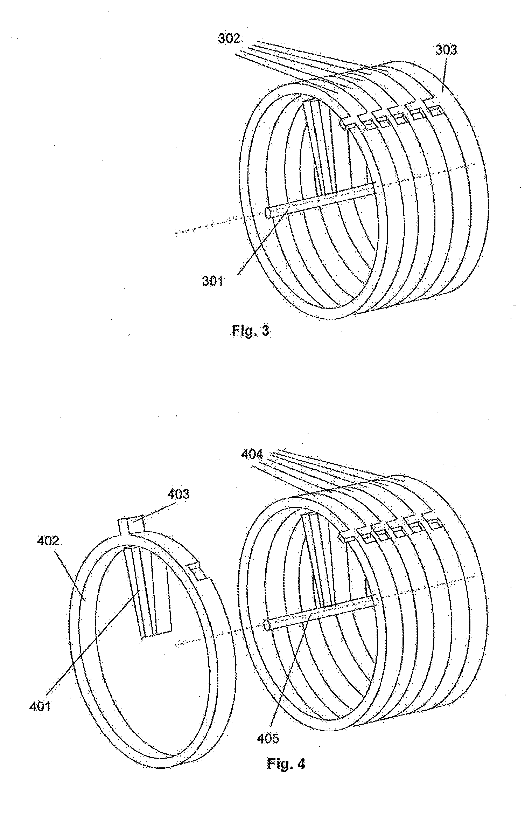

Fig. 3 zeigt die Aneinanderreihung von Ringen 302, 303, wobei die Ringe 302, 303 um eine Achse 301 drehbar angeordnet sind,

Fig. 4 zeigt Ringe 402, 404, wobei der Ring 402 eine radial verlaufende am äußeren Umfang angeordnete Nase 403 aufweist, wobei die Ringe 402, 404 um eine Achse 405 drehbar angeordnet sind. Durch die Nase 403 kann der Ring 402 angetrieben werden, wodurch aufgrund der Nasen/Einbuchtungen-Kombinationen der Ringe 402, 404 sämtliche Ringe 402, 404 (eventuell mit einem Schlupf, da die Einbuchtungen größer ausgebildet sein können als die Nasen) angetrieben werden können.

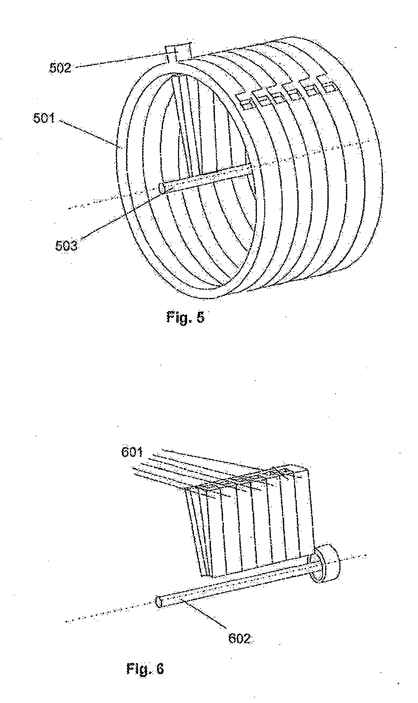

Fig. 5 zeigt eine parallele Anordnung von Ringen 501, die um eine Achse 503 rotierbar angeordnet sind, wobei der Ring 501 eine äußere Nase 502 aufweisen kann.

Fig. 6 zeigt Stege 601 von Ringen, wobei die Ringe aus Gründen der Übersichtlichkeit nicht dargestellt sind. Die Stege 601 sind um die Achse 602 drehbar angeordnet.

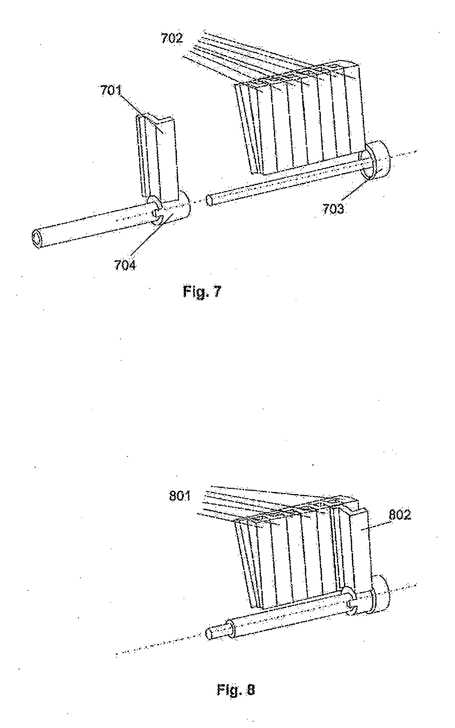

Fig. 7 zeigt Stege 702, die durch die Nasen/Einbuchtungen-Kombinationen miteinander verbunden sein können, wobei die Stege 702 um die Achse 703 rotierbar angeordnet sein können. Ferner ist ein zweitens Element 701 dargestellt, das um die Achse 704 rotierbar angeordnet sein kann, wobei die Achsen 703, 704 gemeinsame Mittellinien aufweisen können.

Fig. 8 zeigt eine Aneinanderreihung von Stegen 801 sowie einen weiteren Steg 802, wobei die Stege 801, 802 um eine gemeinsame Achse drehbar angeordnet sein können.

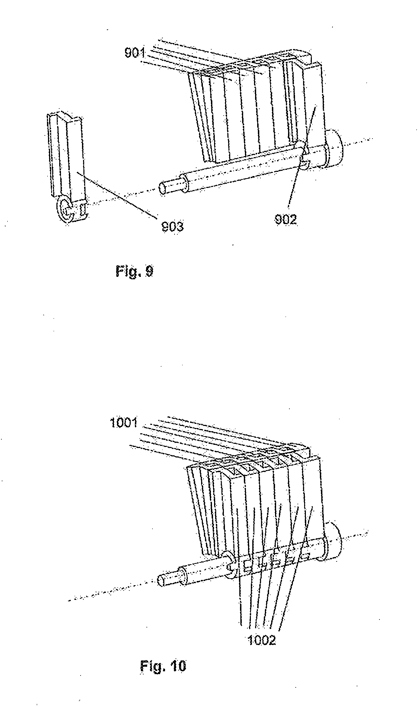

Fig. 9 zeigt eine Anordnung mit ersten Stegen 901 und zweiten Stegen 902, 903, wobei sämtliche Stege 901, 902, 903 um eine gemeinsame Achse rotierbar angeordnet sein können.

Fig. 10 zeigt zwei Reihen von Stegen 1001, 1002, die um eine gemeinsame Achse rotierbar angeordnet sein können.

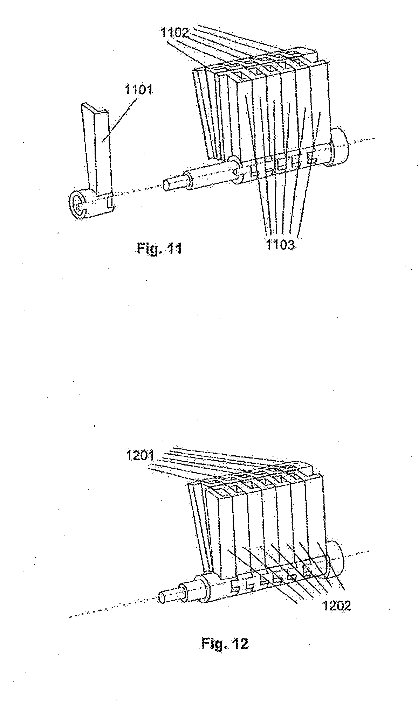

Fig. 11 zeigt eine Reihe erster Elemente 1102 und eine Reihe zweiter Elemente 1103 sowie einen Steg 1101, der die Funktion eines Mitnehmers wahr nehmen kann.

Fig. 12 zeigt eine Reihe erster Elemente 1201 und eine weitere parallel angeordnete Reihe zweiter Elemente 1202.

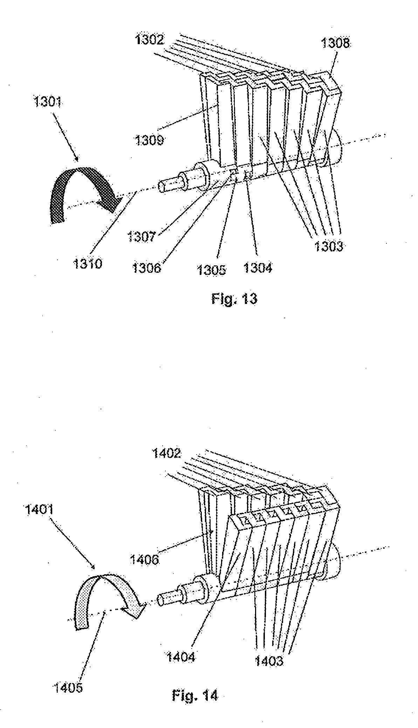

Fig. 13 zeigt zwei Reihen von Stegen 1302, 1303, 1308, 1309, wobei der Steg 1308 um die Achse 1310 gedreht wurde und der Steg 1309 festgehalten wurde, Hierdurch ergibt sich ein "Auffächern" bzw. "Verdrillen" der beiden Reihen von Stegen 1302, 1303, 1308, 1309, wodurch sich bei Anordnung der Stegreihen innerhalb eines Kanals für eine Luftströmung, ein Hindernis für die Luftströmung ergeben kann, wodurch Wirbel und Turbulenzen erzeugt werden können. Die Wirbel und Turbulenzen führen zu Durchmischungen kalter und warmer Luftströmungen, wodurch sich am Ausgang des Kanals eine homogene Luftströmung einstellen kann, Die Vorrichtung weist Nasen 1305 von Hülsen 1304 auf, die in Einbuchtungen 1306 benachbarter Hülsen eingreifen können, wobei die Einbuchtungen 1306 größer als die Nasen 305 ausgebildet sind, wodurch sich ein Schlupf ergeben kann. Aufgrund des Schlupfes ist eine Variation der Betriebszustände der Reihen von Stegen 1302, 1308 und 1303, 1309 zwischen einer "Hintereinanderstellung" und einem "Auffächern" möglich.

Fig. 14 zeigt dieselbe Anordnung zweiter Reihen von Stegen 1402, 1403, 1404, wobei in diesem Fall der Steg 1404 nicht festgehalten wurde, sondern ebenfalls um die Achse 1405 entlang der Rotationsrichtung 1401 gedreht wurde, Hierdurch ergibt sich eine Sackgasse für eine Luftströmung, die entsprechend der Strömungsrichtung 1406 fließt, Insgesamt kann daher erfinfungsgemäß aus einer Anordnung die eine Luftströmung weitgehend unbeeinflusst lässt (siehe Fig. 12), eine Anordnung generiert werden, die die Luftströmung durchmischt (siehe Fig. 13) und schließlich in einer weiteren Ausbildung eine Anordnung gewonnen werden, die eine Luftströmung sperrt (siehe Fig.14). Auf diese Weise können also verschiedene Funktionen, nämlich Durchmischen, Öffnen und Sperren, in einer einzigen Vorrichtung, nämlich der Scheibenklappe, vereinigt werden, was eine Reduzierung der Baugröße einer entsprechenden Klimaanlage ermöglichen kann.

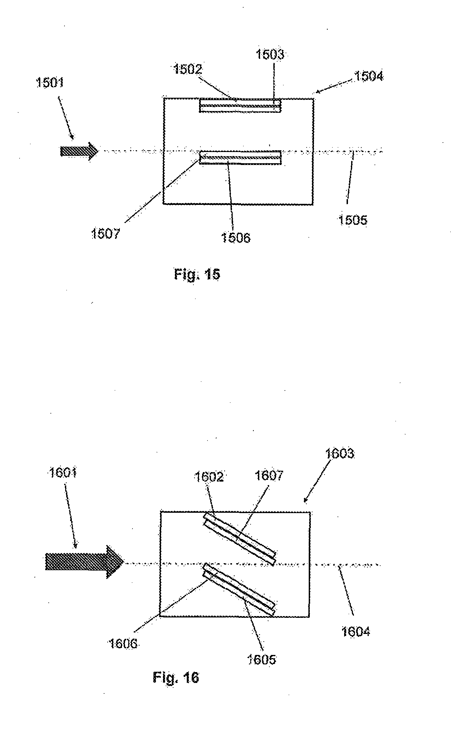

Fig. 15 zeigt in einer Draufsicht zwei Anordnungen von jeweils zwei Reihen von Stegen 1502, 1503 und 1506, 1507, die innerhalb eines Kanals 1504 für eine Luftströmung angeordnet sein können. Die beiden Anordnungen 1502, 1503 und 1506, 1507 sind hierbei derart angeordnet, dass eine Luftströmung 1501, die entlang der Linie 1505 fließen kann, nahezu unbeeinflusst von den beiden Anordnungen 1502, 1503 und 1506, 1507 bleiben kann.

Fig. 16 zeigt in einer Draufsicht zwei Anordnungen von jeweils zwei Reihen von Stegen 1602, 1607 und 1605, 1606 innerhalb eines Kanals 1603 für eine Luftströmung, wobei die beiden Anordnungen 1602, 1607 und 1605, 1606 in etwa diagonal bezüglich der Strömungsrichtung 1604 einer Luftströmung 1601 ausgerichtet sind. Hierdurch wird ein Hindernis für die Luftströmung 1601 gebildet, wodurch ein Durchmischen der Luftströmung 1601 innerhalb des Kanals 1603 sicher gestellt werden kann.

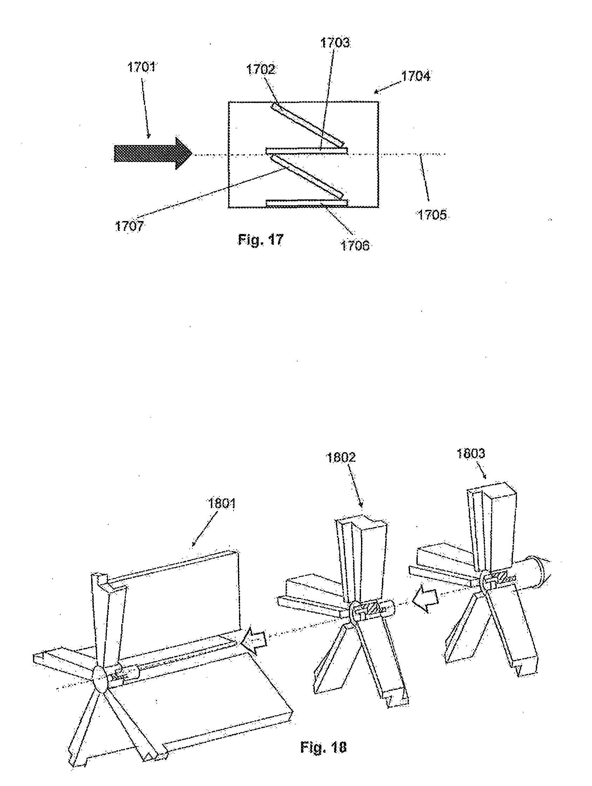

Fig. 17 zeigt eine Anordnung mit jeweils zwei Reihen von Stegen 1702, 1703 und 1706, 1707, wobei die "Auffächerung" der Reihen von Stegen 1702, 1707 in Kombination mit den Reihen 1703, 1706 von Stegen dazu führt, dass die Luftströmung 1701 in Richtung einer Flussrichtung 1705 gesperrt werden kann,

Fig. 18 zeigt drei Formen 1801, 1802, 1803, die innerhalb eines Kanals zur Führung einer Luftströmung zusammengeführt werden können.

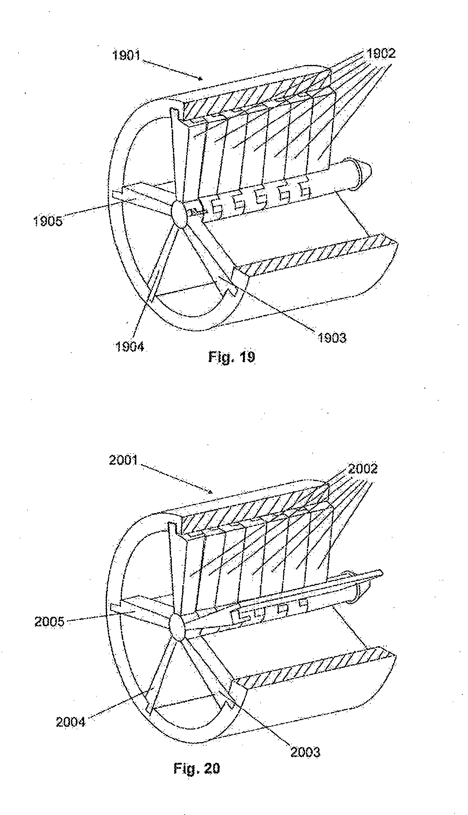

Fig. 19 zeigt einen Kanal für eine Luftströmung mit einem Gehäuse 1901, in dem Formen 1905, 1904, 1903 mit Stegen 1902 angeordnet werden können.

Fig. 20 zeigt einen Kanal für eine Luftströmung mit einem Gehäuse 2001 sowie mit fünf Anordnungen 2003, 2004, 2005 mit Stegen 2002,

Fig. 2 zeigt den Kanal für eine Luftströmung, wobei eine Reihe von Stegen 2102 aufgefächert ist. Die Stege 2102 werden hierzu um eine Drehachse geschwenkt, wobei der Steg 2101 feststehend ausgeführt ist, Der Steg 2101 ist hierbei durch eine Nase, die in eine Nut des Gehäuses eingreift, fixiert. Durch ein derartiges "Auffächern" von Stegen 2102 kann der Kanal für eine Luftströmung versperrt werden. Insgesamt ergibt sich daher durch die Anordnungen 2101, 2102, 2103, 2104, 2105, 2106 die Möglichkeit den Kanal für eine Luftströmung durchgängig oder geschlossen zu "schalten", je nach Stellung der einzelnen Stege 2102.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Vierständlichkeit und sollen keinesfalls als einschränkend betrachtet werden, wobei der Schutzbereich der Erfindung durch die Ansprüche wiedergegeben wird.

### Bezugszeichenliste

- 101: Achse
- 102: Steg
- 103: Nase
- 104: Ring
- 201: Steg
- 202: Nase
- 203: Ring
- 204: Ausbuchtung
- 205: Achse
- 206: Ring
- 207: Steg
- 208: Nase
- 301: Achse
- 302: Ring
- 303: Ring
- 401: Steg
- 402: Ring
- 403: Nase
- 404: Ring
- 405: Achse
- 501: Ring
- 502: Nase
- 503: Achse
- 601: Steg
- 602: Achse
- 701: Steg
- 702: Steg
- 703: Achse
- 704: Achse
- 801: Steg
- 802: Steg
- 901: Steg
- 902: Steg
- 903: Steg
- 1001: Steg
- 1002: Steg
- 1101: Steg
- 1102: Steg
- 1103: Steg
- 1201: Steg
- 1202: Steg
- 1301: Rotationsrichtung
- 1302: Steg
- 1303: Steg
- 1304: Hülse
- 1305: Nase
- 1306: Ausbuchtung
- 1307: Hülse
- 1308: Steg
- 1309: Steg
- 1310: Mittellinie
- 1401: Rotationsrichtung
- 1402: Steg
- 1403: Steg
- 1404: Steg
- 1405: Mittellinie
- 1501: Luftströmung
- 1502: Reihe von Stegen
- 1503: Reihe von Stegen
- 1504: Kanal
- 1505: Mittellinie
- 1506: Reihe von Stegen
- 1507: Reihe von Stegen
- 1601: Luftströmung
- 1602: Reihe von Stegen
- 1603: Kanal
- 1604: Mittellinie
- 1605: Reihe von Stegen
- 1606: Reihe von Stegen
- 1607: Reihe von Stegen
- 1701: Luftströmung
- 1702: Reihe von Stegen
- 1703: Reihe von Stegen
- 1704: Kanal
- 1705: Mittellinie
- 1706: Reihe von Stegen
- 1707: Reihe von Stegen
- 1801: Form zur Anordnung in einem Kanal
- 1802: weitere Form zur Anordnung in einem Kanal
- 1803: weitere Form zur Anordnung in einem Kanal
- 1901: Gehäuse
- 1902: Steg
- 1903: Reihe von Stegen
- 1904: Reihe von Stegen
- 1905: Reihe von Stegen
- 2001: Gehäuse
- 2002: Steg
- 2003: Reihe von Stegen
- 2004: Reihe von Stegen
- 2005: Reihe von Stegen
- 2101: Steg
- 2102: Steg
- 2103: Reihe von Stegen
- 2104: Reihe von Stegen
- 2105: Reihe von Stegen
- 2106: Reihe von Stegen

## Patentansprüche

1. Vorrichtung zum Öffnen oder Sperren eines Kanals für eine Luftströmung und/oder zum Erzeugen eines Dralls einer Luftströmung in einem Kanal, wobei der Kanal eine Längsachse aufweist, wobei die Vorrichtung umfasst eine Reihe erster Elemente (2002, 2101, 2102), wobei die ersten Elemente (2002) in einer ersten Anordnung in Richtung der Längsachse im Wesentlichen hintereinander angeordnet sind und wobei die ersten Elemente (2101, 2102) in einer zweiten Anordnung in Richtung der Längsachse zumindest teilweise hintereinander und jeweils um einen vorgebbaren Winkel verdreht zueinander angeordnet sind, und wobei die Vorrichtung eine Reihe zweiter Elemente (1403, 1404) umfasst, **dadurch gekennzeichnet dass** die zweiten Elemente (1403, 1404) in der ersten Anordnung in Richtung der Längsachse im Wesentlichen hintereinander angeordnet sind und dass die zweiten Elemente (1403, 1404) in der zweiten Anordnung in Richtung der Längsachse wahlweise im Wesentlichen hintereinander oder zumindest teilweise hintereinander und jeweils um einen vorgebbaren Winkel verdreht zueinander angeordnet sind.

2. Vorrichtung nach Anspruch 1, wobei die ersten und/oder zweiten Elemente (203, 206) zumindest teilweise Nasen (202, 208) aufweisen, wobei die Nasen (208) der ersten Elemente in Ausbuchtungen (204) benachbarter erster Elemente und/oder wobei die Nasen der zweiten Elemente in Ausbuchtungen benachbarter zweiter Elemente geführt werden können.

3. Vorrichtung nach Anspruch 2, wobei die Nasen (202, 208) in den Einbuchtungen (204) einen Schlupf aufiweisen.

4. Vorrichtung nach einem der vorhergehenden Ansprüche, wobei die Elemente als Stege (201, 207) ausgebildet sind und jeweils an einem Ring (203, 206) angeordnet sind, wobei die Stege (201, 207) radial nach innen verlaufend ausgebildet sind.

5. Vorrichtung nach Anspruch 4, wobei die Ringe (203, 206) drehbar um eine gemeinsame Achse (205) angeordnet sind.

6. Vorrichtung nach einem der Ansprüche 4 oder 5, wobei der Kanal eine kreiszylindrische Form aufweist.

7. Klimaanlage zum Einbau in ein Fahrzeug, wobei die Klimaanlage eine Vorrichtung nach einem der vorhergehenden Ansprüche umfasst.

8. Fahrzeug, insbesondere ein Auto, wobei das Fahrzeug eine Klimaanlage nach Anspruch 7 umfasst.

## Claims

1. A device for opening or blocking a channel for an airflow and/or for generating a swirl of an airflow in a channel, wherein the channel has a longitudinal axis, wherein the device comprises a row of first elements (2002, 2101, 2102), wherein the first elements (2002) in a first arrangement are arranged substantially one behind the other in the direction of the longitudinal axis, and wherein the first elements (2101, 2102) in a second arrangement are arranged at least partially one behind the other in the direction of the longitudinal axis and are each rotated by a predefinable angle relative to one another, and wherein the device comprises a row of second elements (1403, 1404), **characterised in that** the second elements (1403, 1404) are arranged substantially one behind the other in the direction of the longitudinal axis, and **in that** the second elements (1403, 1404) in the second arrangement are selectively arranged substantially one behind the other or at least partially one behind the other and are each rotated by a predefinable angle relative to one another.

2. The device according to claim 1, wherein the first and/or second elements (203, 206) at least in part have lugs (202, 208), wherein the lugs (208) of the first elements can be guided in indentations (204) of adjacent first elements, and/or wherein the lugs of the second elements can be guided in indentations of adjacent second elements.

3. The device according to claim 2, wherein the lugs (202, 208) have a slip in the indentations (204).

4. The device according to one of the preceding claim, wherein the elements are formed as webs (201, 207) and are each arranged on a ring (203, 206), wherein the webs (201, 207) taper radially inwardly.

5. The device according to claim 4, wherein the rings (203, 206) are arranged rotatably about a common axis (205).

6. The device according to claims 4 or 5, wherein the channel has a circular cylindrical form.

7. An air-conditioning system for installation in a vehicle, wherein the air-conditioning comprises a device according to one of the preceding claims.

8. A vehicle, in particular a car, wherein the vehicle comprises an air-conditioning system according to claim 7.

## Revendications

1. Dispositif servant à l'ouverture ou à la fermeture d'un conduit pour un écoulement d'air et/ou à la production d'un tourbillon d'un écoulement d'air dans un conduit, où le conduit présente un axe longitudinal, où le dispositif comprend une rangée de premiers éléments (2002, 2101, 2102), où les premiers éléments (2002) sont disposés, dans un premier agencement, pratiquement les uns derrière les autres suivant une direction de l'axe longitudinal, et où les premiers éléments (2101, 2102) sont disposés, dans un deuxième agencement, au moins partiellement les uns derrière les autres suivant la direction de l'axe longitudinal et, à chaque fois, en étant tournés les uns vers les autres suivant un angle prédéfinissable, et où le dispositif comprend une rangée de deuxièmes éléments (1403, 1404), **caractérisé en ce que** les deuxièmes éléments (1403, 1404) sont disposés, dans le premier agencement, pratiquement les uns derrière les autres suivant la direction de l'axe longitudinal, et **en ce que** les deuxièmes éléments (1403, 1404) sont disposés dans le deuxième agencement, de façon sélective, pratiquement les uns derrière les autres suivant la direction de l'axe longitudinal ou bien au moins partiellement les uns derrière les autres et, à chaque fois, en étant tournés les uns vers les autres suivant un angle prédéfinissable.

2. Dispositif selon la revendication 1, où les premiers et/ou deuxièmes éléments (203, 206) présentent au moins partiellement des parties faisant saillie (202, 208), où les parties faisant saillie (208) des premiers éléments peuvent être guidées dans des encoches (204) de premiers éléments adjacents et/ou les parties faisant saillie des deuxièmes éléments peuvent être guidées dans des encoches de deuxièmes éléments adjacents.

3. Dispositif selon la revendication 2, où les parties faisant saillie (202, 208) présentent un glissement dans les encoches (204).

4. Dispositif selon l'une quelconque des revendications précédentes, où les éléments sont configurés comme des barrettes (201, 207) et sont disposés à chaque fois sur un anneau (203, 206), où les barrettes (201, 207) sont configurées en s'étendant vers l'intérieur dans le sens radial.

5. Dispositif selon la revendication 4, où les anneaux (203, 206) sont disposés en pouvant tourner autour d'un axe commun (205).

6. Dispositif selon l'une des revendications 4 ou 5, où le conduit présente une forme cylindrique circulaire.

7. Système de climatisation à installer dans un véhicule, où le système de climatisation comprend un dispositif selon l'une quelconque des revendications précédentes.

8. Véhicule, en particulier véhicule automobile, où le véhicule comprend un système de climatisation selon la revendication 7.
